# EUROPEAN PATENT APPLICATION

(11) **EP 4 254 212 A1**
(43) Date of publication of application: **04.10.2023**
(21) Application number: 23157086.2
(22) Date of filing: 16.02.2023
(51) Int. Cl.: G06F 13/42, B60R 21/0132

(54) **METHODS AND DEVICES FOR SNOOPING DATA TRANSFER**

(30) Priority: 01.04.2022 US 202217711681
(71) Applicant: STMicroelectronics S.r.l., 20864 Agrate Brianza (MB) (IT)
(72) Inventor: CASTELLANO, Gerardo, 20090 Cusago (Milano) (IT); GIORDANO, Antonio, 20148 Milano (IT); RAIMONDI, Marcello, 15057 Tortona (Alessandria) (IT)
(74) Representative: Meindl, Tassilo

(57) **Abstract**

A method to arm an airbag, the method including determining, by a system device (106), that an arming condition for the airbag has been met; delivering a communication to a master device (102) from the system device (106) to inform the master device (102) that the arming condition has been met; snooping the communication by an expansion device (106); and arming the airbag by the expansion device (106) in response to snooping the arming condition.

## Description

### Technical Field

The present invention relates generally to systems and methods for snooping data in a system of integrated circuits.

### Background

Generally, data may be communicated between different components of a system, e.g., by using a serial peripheral interface ("SPI"). Data transfers between slave devices and a master device can be enabled by a chip-select (CS) signal. By means of the CS signal, a master device can pick which slave device to enable for data exchange. However, this may prevent parallel exchanges with more than one device without adding multiple pins. Snooping solutions may thus be advantageous to provide data to an unselected slave device in a quick and efficient way that reduces time, space, and resource costs.

### Summary

In embodiments, a method to arm an airbag includes determining, by a system device, that an arming condition for the airbag has been met; delivering a communication to a master device from the system device to inform the master device that the arming condition has been met; snooping, by an expansion device, the communication from the system device; and arming the airbag by the expansion device in response to snooping the arming condition.

In embodiments, an airbag-deployment system includes: a master device configured to output a system chip-select signal, output an expansion chip-select signal, output a master-out slave-in (MOSI) signal, and receive a master-in slave-out (MISO) signal; a system device including, a MISO output, a chip-select input configured to receive the system chip-select signal originating from the master device, the system chip-select signal enabling communication of the MISO signal from the system device to the master device, a sensor interface to receive sensor data, and logic circuitry configured to generate an arm command carried on the MISO signal in response to an arm condition being met by the sensor data; and an expansion device including, a snooping decoder circuit configured to receive the system chip-select signal originating from the master device and receive the MISO signal, the snooping decoder circuit being enabled by the system chip-select signal, a standard decoder circuit configured to receive the expansion chip-select signal and output the MISO signal, the standard decoder circuit being enabled by the expansion chip-select signal originating from the master device, and arming logic that receives as input a decoded MISO signal from the snooping decoder circuit and configured to output an arm signal to an airbag driver in response to identifying the arm command carried on the decoded MISO signal.

In embodiments, an expansion device for an airbag-deployment system includes a snooping decoder circuit configured to receive a slave-device chip-select signal originating from a master device and receive a Master In Slave Out (MISO) signal originating from a slave device, the snooping decoder circuit being enabled by the slave-device chip-select signal; a standard decoder circuit configured to receive an expansion chip-select signal originating from the master device and output the MISO signal, the standard decoder circuit being enabled by the expansion chip-select signal; and arming logic that receives a decoded MISO signal from the snooping decoder circuit and configured to output an arm signal to an airbag driver in response to identifying an arm command carried on the decoded MISO signal.

### Brief Description of the Drawings

For a more complete understanding of the present invention, and the advantages thereof, reference is now made to the following descriptions taken in conjunction with the accompanying drawings, in which:
- Figure 1 shows an airbag-deployment system with snooping in accordance with embodiments;
- Figure 2 depicts an airbag-deployment system with snooping in accordance with embodiments;
- Figure 3 depicts an airbag-deployment system with snooping and multiple expansion ICs in accordance with embodiments;
- Figure 4 depicts an airbag-deployment system with snooping in accordance with embodiments;
- Figure 5 depicts a snooper decoder circuit in accordance with embodiments; and
- Figure 6 depicts a method in accordance with embodiments.

### Detailed Description of Illustrative Embodiments

Master slave systems comprise master devices that controls aspects of the operations of slave devices. In the context of digital systems, a master device may comprise a microcontroller or other processor that directs the operation of other integrated circuits. Communications between the master device and the slave devices may be accomplished by coupling (e.g., connecting) the master device and slave devices together.

A serial peripheral interface ("SPI") provides a familiar standard for communications between master devices and slave devices. Communications from the master to the slaves may be carried on a Master Out Slave In ("MOSI") signal. Communications from the slave devices to the master may be carried on a Master In Slave Out ("MISO") signal. The master may also provide a clock signal for synchronization of the various components of the system.

To avoid data traffic collisions, the master device may also drive a CS signal that determines which slave device can communicate at a given time with the master. However, in some time-critical applications slave devices may need to communicate in parallel with communication between a slave and a master because there is no time to wait for data to be relayed from one slave device to a master device and then to another slave device.

Airbag deployment systems provide one example. Many airbag deployment systems employ a slave device that receive sensor data and decides whether an arm condition has been met for an airbag. This may be communicated to a master device, which then decides whether to deploy an airbag. However, airbags are armed before they can be deployed. And, another slave device may be used to arm the airbag for deployment. To expedite deployment, it thus is needed to arm the airbag as soon as an arm condition is met so that the arming occurs in parallel with decision making by the master. An expedited path to deliver data from one slave device to another slave device can thus benefit such system. However, real estate on an integrated circuit can be scarce. So, adding pin connections between slave devices may prove burdensome.

In various embodiments, an airbag-deployment system may snoop data transferred from another slave device to a master to shortcut data delivery.

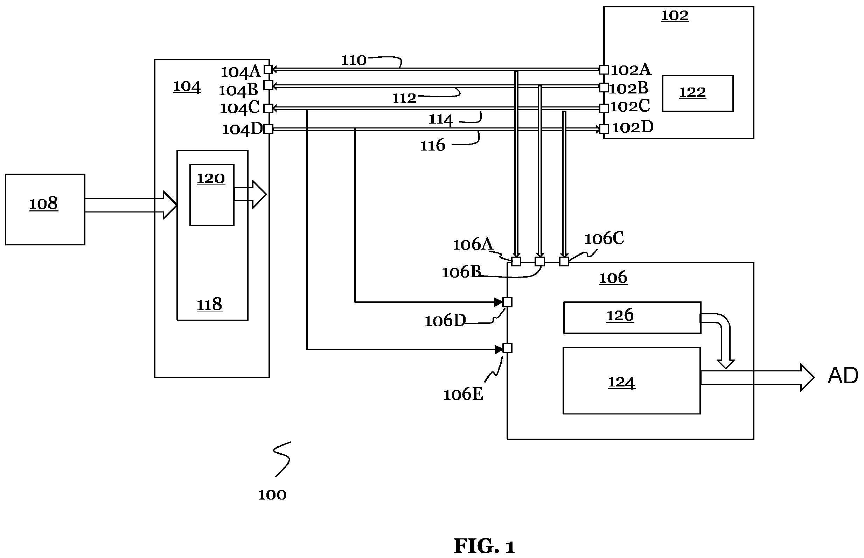

Figure 1 shows an airbag-deployment system with snooping in accordance with embodiments.

The airbag-deployment system with snooping 100 may comprise a microcontroller master 102. This may be referred to as a master device. It should also be appreciated the master device may comprise a microcontroller or other processing component in various embodiments. While the master may be referred to as a microcontroller, this should not be taken to limit application to microcontrollers. The airbag-deployment system with snooping 100 may further comprise a system integrated circuit. The system IC 104 may be referred to as a system device. The airbag-deployment system with snooping 100 may also comprise an expansion IC 106. The expansion IC may be referred to as an expansion device. The airbag-deployment system with snooping 100 may also comprise a sensor 108.

As will be appreciated, more ICs and more sensors may be utilized in various embodiments. For example, the airbag-deployment system with snooping 100 may comprise more than one system IC 104, more than one expansion IC 106, and more than one sensor 108.

The communication between the microcontroller master 102 and the system IC 104 and the expansion IC 106 may be accomplished via a bussing system. A clock signal may be delivered from the microcontroller master 102 to the system IC 104 and the expansion IC 106 by a clock wire 110. As will be appreciated, the clock signal may be generated by the microcontroller master 102 and provided to the system IC 104 and the expansion IC 106 to synchronize operations. The clock signal may also be provided to other slave devices (not depicted in Figure 1). The clock wire 110 may be coupled with a clock output 102A of the microcontroller master 102 and a clock input 104A of the system IC 104. The clock wire 110 may also be coupled with a clock input 106A of the expansion IC 106. As will be appreciated, the clock wire 110 (and other wires referenced in this disclosure) may comprise a collection of wires, and in various embodiments a bus.

The microcontroller master 102 may communicate a Master Out Slave In ("MOSI") signal with a MOSI signal wire 112. The MOSI signal wire 112 may be coupled with a MOSI output 102B of the microcontroller master 102 and with a MOSI input 104B of the system IC 104. The MOSI signal wire 112 may also be coupled with a MOSI input 106B of the expansion IC 106. In various embodiments, the MOSI signal wire 112 may also be coupled with inputs of additional slave devices. The MOSI signal may communicate commands, data or both from the microcontroller master 102 to the slave devices (for example, system IC 104 and expansion IC 106). As will be appreciated, the MOSI signal wire 112 may comprise a collection of wires, and in various embodiments a bus.

The system IC 104 may also generate a Chip Select ("CS") signal. The chip select signal may enable communications between a chosen slave device and a master device. It may be set depending on the status of the airbag-deployment system with snooping 100. For example, if communications between the system IC 104 are desired the CS signal may be set for enabling communication with the system IC 104. The same may be done when communication is desired with the expansion IC 106 or any other slave device.

The CS signal may be carried from the microcontroller master 102 to slave devices such as system IC 104 and the expansion IC 106 by a CS signal wire 114. The CS signal wire 114 may be coupled with a CS output 102C of the microcontroller master 102 and with a CS input 104C of the system IC 104. The CS signal wire 114 may also be coupled with a CS input of the expansion IC 106 as well as inputs for any other slave devices. As will be appreciated, the CS signal wire 114 may comprise a collection of wires, and in various embodiments a bus. The CS signal may comprise one-bit signals that correspond to slave devices. For example, one bit may enable the system IC 104 and another bit may enable expansion IC 106. Accordingly, in various embodiments, the corresponding bit may be communicated alone to the respective slave to reduce wiring.

Slave devices may communicate with the microcontroller master 102 with a Master In Slave Out ("MISO") signal. The MISO signal may be carried on a MISO signal wire 116. The MSIO signal wire may be coupled with a MISO input 102D of the microcontroller master 102 and a MISO output 104D of the system IC 104. Additionally, the MISO signal wire 116 may be coupled with MISO interface 106D of the expansion IC 106. The MISO signal wire 116, as will be appreciated, may be coupled with additional slave outputs to allow communication from the slaves to the master device.

In various embodiments, the sensor may be used to detect vehicle collisions. For example, the sensor 108 may comprise an accelerometer, such as a Hall Effect sensor, or other sensor device sensitive to changes in acceleration. As will be appreciated, sudden deceleration of an automobile may indicate that a collision has occurred or will occur. The sensor 108 may be sensitive to changes in acceleration. However, it should be appreciated that the sensor 108 is not limited to accelerometers and other sensors that measure dimensions associated with automobile collisions may be utilized.

The sensor 108 may provide data to the system IC 104. Delivery of the sensor data to the system IC 104 may be accomplished with a sensor interface (not shown in Fig. 1) or by a bussing where the sensor may be coupled with the clock wire 110, MOSI signal wire 112, CS signal wire 114, and MISO signal wire 116. In various embodiments, the sensor data may be sent with a PSI5 (Peripheral Sensor Interface for Automotive Applications) protocol to the system IC.

Once sensor data is received by the system IC 104 it may be provided by internal bussing to a digital signal processor or other processing circuity. The digital signal processor may comprise logic circuitry 120 that compares the sensor data with a threshold to arm an airbag. If the threshold is met, the system IC 104 may generate an arm command. An arm command may be utilized to enable operation of the airbag driver AD. For example, the airbag driver AD may be polarized in response to receiving an arm command.

The arm command may be provided to the MISO signal and carried on the MISO signal wire 116 to the microcontroller master 102. The microcontroller master 102 may also receive sensor data. The microcontroller master 102 may receive sensor data from sensor 108 by way of the system IC 104 through the MISO signal wire 116. Additionally, the microcontroller master 102 may receive sensor data from other sensors not shown in Figure 1.

Alerted by the arm command generated by the system IC 104, the microcontroller master 102 may evaluate whether to send a deploy command. The microcontroller master 102 may comprise logic circuitry 120 to evaluate whether to generate a deploy command. As will be appreciated, this may also be accomplished with software. Internal bussing may route the arm command from the MISO input 102D to logic circuitry 122. The MCU may check the compare sensor data with a threshold for deployment. This may be for redundancy. For a multi-airbag system, the microcontroller master 102 may also determine which airbag to deploy. This may depend on sensor readings from different sensors located throughout a vehicle that may be communicated to the microcontroller master 102, for example using a MISO signal wire 116. Logic circuitry 122 may determine whether a deploy command is needed.

While the microcontroller master 102 evaluates whether an airbag deployment is needed, it may be beneficial to arm the airbag to enable deployment and prepare it for deployment. As will be appreciated, this may comprise polarizing an airbag driver AD. In various embodiments, the expansion IC 106 may arm the airbag driver AD. To shortcut dissemination of data from the system IC 104 to the microcontroller master 102, the expansion IC 106 may snoop data sent by the system IC 104 to the microcontroller master 102. Snooping by the expansion IC 106 may be enabled by CS signal. As referenced earlier, communication between the system IC 104 and the microcontroller master 102 may be enabled by the CS signal.

After the microcontroller master 102 determines that a deploy command should be issued, the airbag-deployment system with snooping 100 takes advantage of this and uses the same signal to enable snooping as the microcontroller master 102 uses to enable communication between the system IC 104 and the microcontroller master 102. The system IC 104 may be enabled by a single one-bit signal, in various embodiments, so minimal resources are used by the expansion IC 106 for snooping, and, whenever the system IC 104 is enabled, the snooping by the expansion IC 106 may also be enabled.

To accomplish this, the CS signal wire 114 may be coupled with a snoop-enable input 106E. When snooping is enabled, the expansion IC 106 may receive the MISO signal via the MISO interface 106D, which is coupled with the MISO signal wire 116. Thus the MISO signal may comprise an input for slave devices. This may allow the expansion IC 106 to snoop communications between the system IC 104 and the microcontroller master 102. When the system IC 104 generates an arm command, the expansion IC 106 may also receive the command as it is transmitted to the microcontroller master 102. In response to receiving an arm command, the expansion IC 106 may polarize the airbag driver AD. Internal bussing for the expansion IC 106 may carry the arm command from the MISO interface 106D to internal logic circuit 124 that evaluate the communication. After deciding arm conditions have been met the internal logic circuit 124 in turn communicate the arm command to an airbag driver AD.

Meanwhile, the microcontroller master 102 may have determined to issue a deploy command. The deploy command may be output by the microcontroller master 102 to the MOSI output 102B. This may be carried to the expansion IC 106 by the MOSI signal wire 112 and to the MOSI input 106B. The deployment command may be delivered, by internal bussing of the expansion IC 106, to a logic circuit 126 to decide whether a communication comprises a deployment command (which may depend on the data content and source ID information of the command). In various embodiments, the arm command may be a perquisite for issuing the deploy command to the airbag driver AD. Further, logic circuit 126 may determine which airbags may need to be deployed based on the deploy command. For example, an expansion IC 106 may be coupled with a plurality of airbag drivers AD, each airbag driver AD used for deploying one or more airbags. Logic circuit 126 may determine which airbags have been ordered for deployment. The deploy command may then be communicated to the airbag driver AD (or appropriate airbag driver in various embodiments). The deploy command may comprise switching on a gate command via an SPI to open an airbag (or airbags).

Utilizing the CS signal to enable and disable snooping allows an efficient architecture for quickly snooping data. Only one bit may be needed to enable communications for a slave device so enabling snooping may likewise be accomplished by adding a one-bit input to another slave device. This may be hardwired to the snooping slave device. Further, the MISO signal is already coupled with the slave so the arm command may be provided to a snooping slave device without any further couplings (other than the CS).

The expansion IC 106 may also be coupled with the CS signal wire 114 to receive a CS signal that enables and disables communication between the microcontroller master 102 and the expansion IC 106. The expansion IC 106 may comprise a CS input 106C. This may be in addition to the coupling the MISO interface 106D. In this way, the expansion IC 106 may receive the CS signal that enables communication between the system IC 104 and the microcontroller master 102 (which may be used by the expansion IC 106 for enabling snooping) and receive the CS signal that enables communication between the expansion IC 106 and the microcontroller master 102.

As will be appreciated, additional data may be carried on the MISO signal from the microcontroller master 102 to the microcontroller master 102 that may be advantageously snooped by the expansion IC 106.

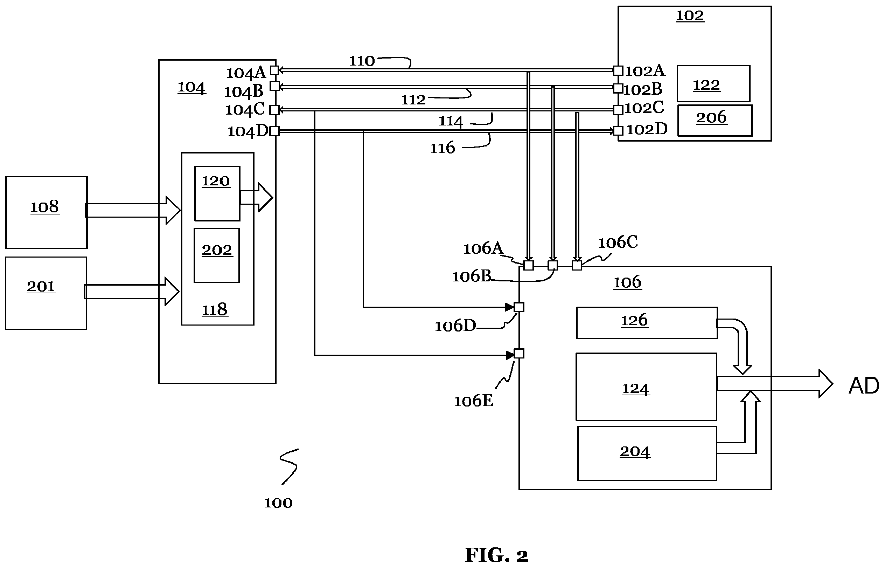

Figure 2 depicts an airbag-deployment system with snooping in accordance with embodiments.

Unless otherwise noted, reference identifiers repeated in the figures for this disclosure are used to denote the same feature in different figures. For the sake of brevity, the overlapping features will not be described again for the remaining figures. In various embodiments, the airbag-deployment system with snooping 100 may also comprise passenger inhibit logic 202 for the system IC 104. Passengers may be detected from pressure in a seat. A sensor may also be in place in a seat belt to determine if a passenger is present. As will be appreciated, other approaches may be used to determine if a passenger is present. The sensor 201 may provide sensor data to the system IC 104. Based on this data it may be determined whether a passenger is present in a given seat in a vehicle. If a passenger is not present in a given seat, it may not be beneficial to deploy an airbag for that seat. If no passenger is detected by the passenger inhibit logic, a passenger inhibit signal may be sent on the MISO signal. This may require enablement of the CS signal for the system IC 104, which may simultaneously enable snooping of the MISO signal by the expansion IC 106. The expansion IC 106 may also comprise passenger inhibit logic 204 that can pass the passenger inhibit signal to block a deploy command. The microcontroller master 102 may also comprise passenger inhibit logic that can block a deploy command when passenger inhibit is communicated from system IC 104.

In various embodiments, an airbag deployment system may comprise multiple expansion Ics.

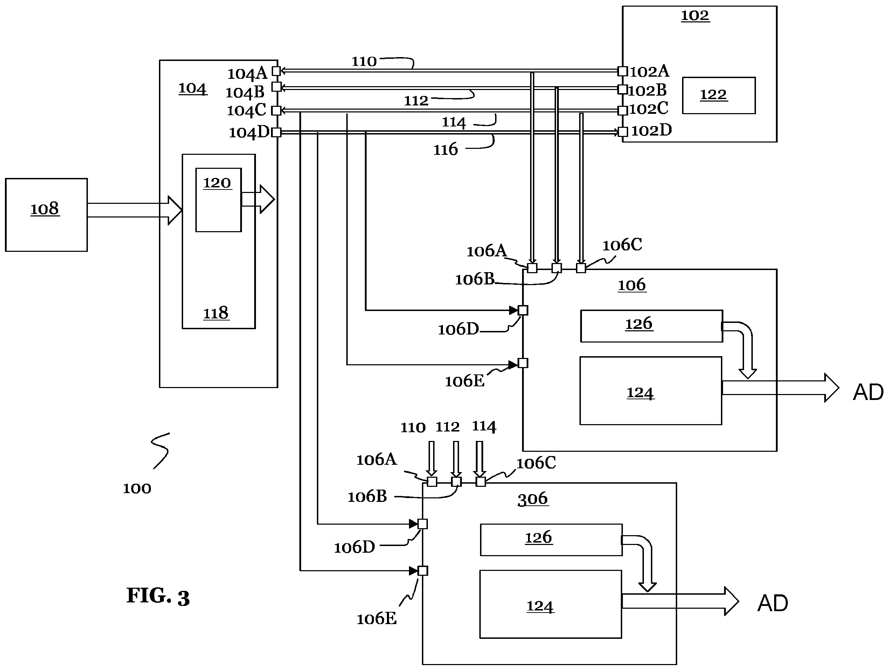

Figure 3 depicts an airbag-deployment system with snooping and multiple expansion Ics in accordance with embodiments.

Figure 3 depicts a second expansion IC 306. Like the expansion IC 106, the second expansion IC 306 may also comprise a clock input 106A, MOSI input 106B, a CS input, a MISO interface 106D, and a snoop-enable input 106E, coupled with the clock wire 110, MOSI signal wire 112, CS signal wire 114, MISO signal wire 116, and the CS signal wire 114 respectively. The second expansion IC 306 may also snoop data transmitted from the system IC 104 to the microcontroller master 102 to arm an airbag driver AD. As will be appreciated, it may be advantageous to have more than one expansion circuit to drive additional airbags. In various embodiments, one expansion IC may be utilized to drive more than one airbag. In various embodiments, the system IC 104 may be configured to snoop data from the expansion IC 106. Any slave device may snoop the CS signals of the other slave device to snoop data transmissions between the other slave devices and a master device.

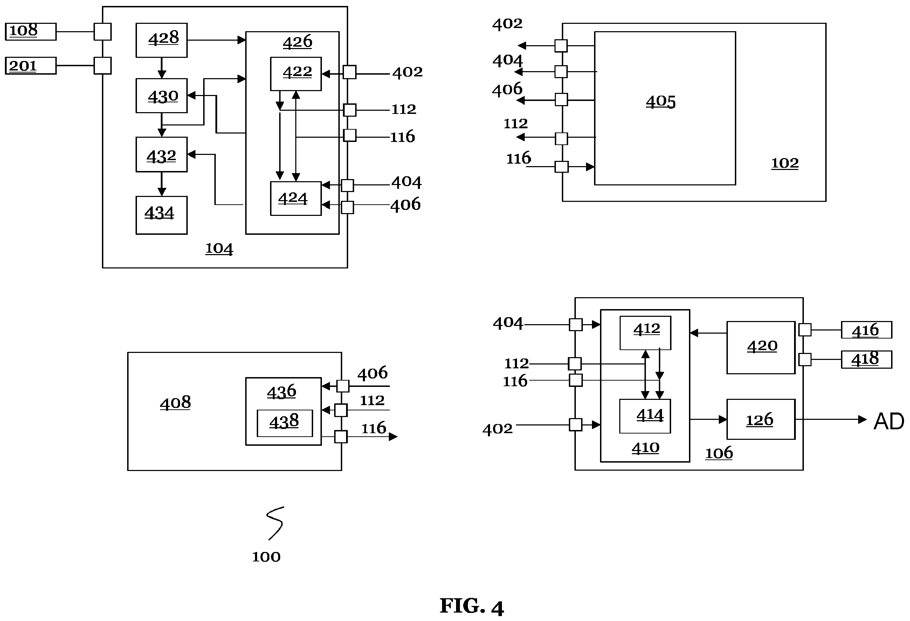

Figure 4 depicts an airbag-deployment system with snooping in accordance with embodiments.

As will be appreciated, there are many embodiments of an airbag-deployment system with snooping 100. In various embodiments, airbag-deployment system with snooping 100 may comprise multiple system Ics, multiple expansion Ics, multiple sensors, additional slave devices, and any combination thereof.

In various embodiments, the microcontroller master 102 may produce independent CS signals for its slave devices. For example, a system CS signal 402 may be used to enable communication with a system IC 104, an expansion CS signal 404 may be used to enable communication with an expansion IC 106, and a sensor CS signal 406 may be used to enable communication with a sensor 408. In Figure 4, depiction of wiring coupling various components has been omitted to avoid overlapping symbols for clarity. Also, for clarity, Figure 4 does not depict a clock signal. However, the microcontroller master 102 may generate a clock signal that is provided to each slave device such as system IC 104, expansion IC 106, and sensor 408. It should be appreciated that the microcontroller master 102 may also comprise outputs for each of the CS signals. Further, microcontroller master 102 may also receive a MISO signal at MISO signal wire 116 and output a MOSI at MOSI signal wire 112. The microcontroller master 102 may also comprise an SPI interface 405.

The system IC 104 may receive the MOSI signal wire 112 (for example at MOSI input 106B). The system IC 104 may also receive expansion CS signal 404 (for example at CS input 106C). The system IC 104 may also receive system CS signal 402 and be coupled with the MISO signal wire 116. The system IC 104 may comprise a SPI interface 410.

The expansion IC 106 may comprise two decoders in various embodiments. A first decoder 412 (which may be referred to as a standard decoder) may be enabled by the expansion CS signal 404. As will be appreciated, the system IC 104 may drive the expansion CS signal 404 to an enabled state to allow communication exchanges between the expansion IC 106 and the microcontroller master 102. The first decoder 412 may provide output for the MISO signal wire 116 and receive input from the MISO signal wire 116. The first decoder 412 may also receive the expansion CS signal 404. When enabled, the first decoder may decode signals carried from the microcontroller master 102 to the expansion IC 106 on the MOSI signal wire 112. For example, a deploy command.

In various embodiments, the system IC 104 may also comprise a snooping decoder 414. The snooping decoder 414 may be enabled by the system CS signal 402. Internal bussing for the expansion IC 106 (not shown in Figure 4) may deliver the CS signal 402 to the snooping decoder 414. When the system CS signal 402 is driven by the microcontroller master 102 to allow communications between the microcontroller master 102 and the system IC 104, this may enable the snooping decoder by way of a hardwiring coupling between the expansion IC and the system CS signal 402. The snooping decoder 414 may also be coupled with MISO signal wire 116 and can thus receive (and decode) communications from the system IC 104 to the microcontroller master 102. This may allow snooping of an arm command, passenger inhibit, or other signal. As will be appreciated, using a MISO signal as an input allows a slave device to acquire data at the same time as an MCU. Decoded signals may also be provided to logic circuit 126, which may output an arm command to an airbag driver AD.

In various embodiments, the expansion IC 106 may also be coupled with one or more sensors. For example, sensor 416 and sensor 418. The expansion IC 106 may also comprise a sensor interface 420. Data received from the sensor 416, sensor 418 may be transmitted to the first decoder 412, and sensor data may be output on the MISO signal wire 116 when communications are enabled between the expansion IC 106 and the system IC 104 by the expansion CS signal 404. This may allow the system IC 104 or microcontroller master 102 to evaluate sensor data from the sensor 416 and sensor 418 to determine whether arming and deploying an airbag is needed.

Additional slave devices may also be enabled for snooping. And, snooping may be enabled to snoop from more than slave device. The system IC 104 may receive the system CS signal 402, expansion CS signal 404, and sensor CS signal 406 in addition to the MOSI signal wire 112. The system IC 104 may also be coupled with the MISO signal wire 116. The system IC 104 may comprise a first decoder 422 and a snooping decoder 424. The system IC 104 may also comprise a SPI interface 426. The system IC 104 may comprise a sensor interface 428, a DSP 430, arming circuit 432, and deployment logic circuit 434.

The first decoder 422 may be enabled by the system CS signal 402. The microcontroller master 102 may drive the system CS signal 402 when communication with the system IC 104 is desired. Data from the microcontroller master 102 may carried on the MOSI signal wire 112 and data from the system IC 104 for the microcontroller master 102 may be carried on the MISO signal wire 116. The first decoder may output to the MISO signal wire 116 and receive input from the MOSI signal wire 112.

The snooping decoder may be enabled by expansion CS signal 404. This may allow snooping of communications from the expansion IC 106 with the microcontroller master 102 via the MISO signal wire 116, which may be coupled with snooping decoder 424. The snooping decoder may thus receive input from the MISO signal wire 116 and snoop data output by the expansion IC 106 on the MISO signal wire 116. The snooping decoder 424 may also output to the MOSI signal wire 112. The snooping decoder may be enabled by sensor CS signal 406. This may allow the system IC 104 to snoop communications from the sensor 108 to the system IC 104 provided on the MISO signal wire 116. Thus, a slave device may be configured to snoop on more than one other slave device. In various embodiments, snooping additional slave devices may occur.

The sensor interface 428 may receive sensor data from the sensor 108 or sensor 201. As will be appreciated, the number and positioning of sensors may vary from embodiment to embodiment. The sensor interface 428 may provide sensor data to the DSP 430. The sensor interface may also provide sensor data to the SPI interface 426 (and the first decoder 422) where it can be output on the MISO signal wire 116. The microcontroller master 102 may then analyze it (as well as any slave device snooping the data).

The DSP 430 may comprise logic to determine whether an arm condition has been met. If an arm condition is met, this may be communicated to an arming circuit 432 for an airbag driver AD. The arm condition may also be communicated to the first decoder, which can transmit it via the MISO signal wire 116 to the microcontroller master 102. It may also be snooped at this time. If a deploy command and arm condition have occurred, the deploy signal may be provided by the system IC 104 to an airbag driver AD.

In various embodiments, a sensor 408 may comprise an SPI interface 436.The SPI interface 436 may comprise a decoder 438. The sensor 408 may receive the sensor CS signal 406 at CS input. This may enable the decoder 438 and allow communication between the sensor 408 and the microcontroller master 102. Communications from the microcontroller master 102 may be received via the MOSI signal wire 112, and communications to the microcontroller master 102 may be delivered via the MISO signal wire 116. As will be appreciated, these communications may be snooped (for example by system IC 104) by other slave devices.

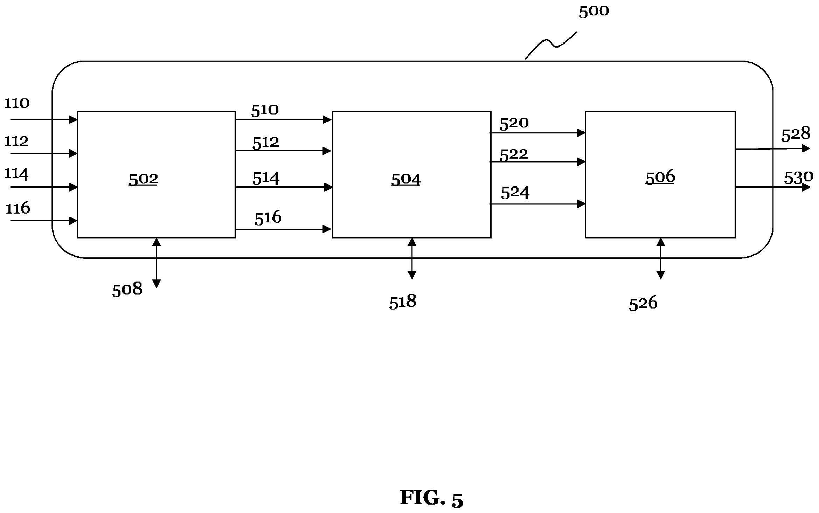

Figure 5 depicts a snooper decoder circuit in accordance with embodiments

In various embodiments, a snooper decoder may comprise a physical layer decoder 502, a protocol layer decoder 504, and a source ID checker. The physical layer decoder may receive clock wire 110, MOSI signal wire 112, CS signal wire 114, and MISO signal wire 116. As will be appreciated, the CS signal wire 114 may comprise a single bit depending on the desired slave to be snooped. For example, in various embodiments, it may comprise expansion CS signal 404, sensor CS signal 406, or system CS signal 402. In various embodiments, it more than one CS signal may be provided to a single slave if snooping of more than one other slave device is desired. The CS signal may be provided to internal logic to enable the snooper decoder circuit.

They physical layer decoder may monitor both MOSI signal and MISO signal and extract respective frames. The address may be extracted from a MOSI signal to check that it matches the address of the snooping target. Safety checks may also be performed such as cyclic redundancy check (CRC), which may be useful for error detection. Configuration data for the safety check such as the CRC polynomial and CRC seed may be provided at input 508. Clock Phase (CPHA) and Clock Polarity configurations may also be provided at input 508. The CPHA and CRC are completely configurable which may allow the decoder 500 to receive communications from different types of sources.

An end-of-frame pulse may be output from the physical layer decoder 502 at output 510 to the protocol layer decoder 504. The MISO frame may be output from the physical layer decoder 502 at output 512 to the protocol layer decoder 504. The MOSI frame may be output from the physical layer decoder 502 at output 514 to the protocol layer decoder 504. And, results of safety check may be output from the physical layer decoder 502 at output 516 to the protocol layer decoder 504.

The protocol layer decoder may apply mask configurations to extract MISO Source ID, MOSI Source ID, and MISO Data. Masking configuration may be provided to the protocol layer decoder 504 at input 518 as well IN/OUT of frame protocol. Source ID may contain information on the peripheral address and type of data from the MOSI and MISO signal.

The MISO Source ID may be provided to the Source ID Checker 506 at output 520. The MOSI Source ID may be provided to the Source ID Checker 506 at output 522.The MISO Data may be provided to the Source ID Checker 506 at output 522. The Source ID Checker 506 may also receive a MISO Source ID target (or targets) and MOSI Source ID target (or targets) at input 526. The Source ID checker may compare the MOSI Source ID and MISO Source ID with targets to determine if the communications are intended for a target location. This may beneficial to filter unwanted communications to avoid false triggers. It will be appreciated, that slaves may provide any number of different communications to a master so filtering unwanted addresses may be advantageous. Data may be output form the decode at 530, which then may be evaluated to determine whether to arm an airbag. Start pulse for logic circuit to evaluate the data may be provided at output 328.

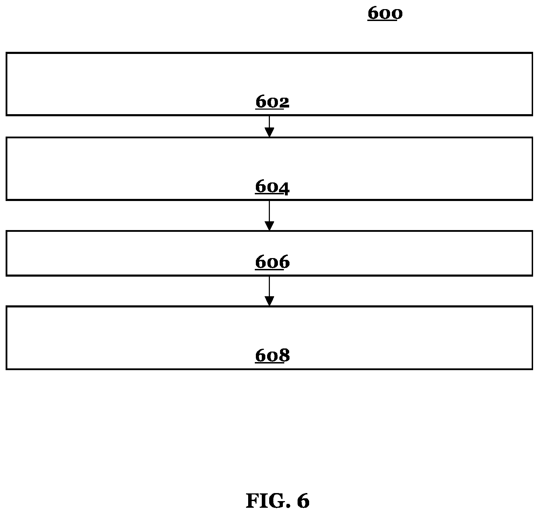

Figure 6 depicts a method in accordance with embodiments.

In various embodiments, a method 600 to arm an airbag may comprise, at a step 602, determining, by a system device, that an arming condition for the airbag has been met; at a step 604, delivering a communication to a master device from the system device to inform the master device that the arming condition has been met; at a step 606, snooping the communication by an expansion device; and at a step 608, arming the airbag by the expansion device in response to snooping the arming condition.

In various embodiments, the method 600 may further comprise, receiving sensor data by the system device.

In various embodiments, the method 600 may further comprise, wherein determining that the arming condition for the airbag has been met comprises evaluating the sensor data received by the system device.

In various embodiments, the method 600 may further comprise, wherein evaluating the sensor data comprises finding the sensor data received by the system device exceeds an arming threshold.

In various embodiments, the method 600 may further comprise, enabling communication between the master device and the system device with a system chip select signal driven by the master device, and further comprising enabling snooping with the system chip select signal.

In various embodiments, the method 600 may further comprise, decoding the communication between the master device and the system device by the expansion device.

In various embodiments, the method 600 may further comprise, determining a passenger seat is vacant, and, in response to determining that the passenger seat is vacant, inhibiting airbag deployment.

In various embodiments, the method 600 may further comprise, issuing a deployment command by the master device that triggers deployment of the airbag by the system device or the expansion device.

In various embodiments, the method 600 may further comprise, wherein arming the airbag comprises polarizing an airbag driver.

Example 1. A method to arm an airbag, the method including: determining, by a system device, that an arming condition for the airbag has been met; delivering a communication to a master device from the system device to inform the master device that the arming condition has been met; snooping, by an expansion device, the communication from the system device; and arming the airbag by the expansion device in response to snooping the arming condition.

Example 2. The method of Example 1, further including receiving sensor data by the system device.

Example 3. The method of Example 1 or Example 2, wherein determining that the arming condition for the airbag has been met includes evaluating the sensor data received by the system device.

Example 4. The methods of Example 1 through Example 3, wherein evaluating the sensor data includes finding the sensor data received by the system device exceeds an arming threshold.

Example 5. The methods of Example 1 through Example 4, further including enabling communication between the master device and the system device with a system chip select signal driven by the master device, and further including enabling snooping with the system chip select signal.

Example 6. The methods of Example 1 through Example 5, further including decoding the communication between the master device and the system device by the expansion device.

Example 7. The methods of Example 1 through Example 6, further including determining a passenger seat is vacant, and, in response to determining that the passenger seat is vacant, inhibiting airbag deployment.

Example 8. The methods of Example 1 through Example 7, further including issuing a deployment command by the master device that triggers deployment of the airbag by the system device, the expansion device, or both.

Example 9. The methods of Example 1 through Example 8, wherein arming the airbag includes polarizing an airbag driver.

Example 10. An airbag-deployment system including: a master device configured to output a system chip-select signal, output an expansion chip-select signal, output a master-out slave-in (MOSI) signal, and receive a master-in slave-out (MISO) signal; a system device including, a MISO output, a chip-select input configured to receive the system chip-select signal, the system chip-select signal enabling communication of the MISO signal from the system device to the master device, a sensor interface to receive sensor data, and logic circuitry configured to generate an arm command carried on the MISO signal in response to an arm condition being met by the sensor data; and an expansion device including, a snooping decoder circuit configured to receive the system chip-select signal and receive the MISO signal, the snooping decoder circuit being enabled by the system chip-select signal, a standard decoder circuit configured to receive the expansion chip-select signal and output the MISO signal, the standard decoder circuit being enabled by the expansion chip-select signal, and arming logic that receives as input a decoded MISO signal from the snooping decoder circuit and configured to output an arm signal to an airbag driver in response to identifying the arm command carried on the decoded MISO signal.

Example 11. The airbag-deployment system of Example 10, wherein the system device further includes a passenger-inhibit logic circuit configured to receive sensor data and configured to generate an passenger inhibit command on the decoded MISO signal in response to determining a passenger-seat vacancy.

Example 12. The airbag-deployment system of Example 10 or Example 11, wherein the expansion device further includes an inhibition logic circuit that receives the decoded MISO signal, the inhibition logic circuit being configured to inhibit an airbag deployment command in response to identifying the passenger inhibit command on the decoded MISO signal.

Example 13. The airbag-deployment systems of Example 10 through Example 12, wherein the system device further includes a system-device snooping decoder circuit configured to receive the expansion chip-select signal and receive the MISO signal, the snooping decoder circuit being enabled by the expansion chip-select signal to decode communications carried on the MISO signal between the expansion device and the master device.

Example 14. The airbag-deployment systems of Example 10 through Example 13, wherein the system-device snooping decoder circuit is further configured to receive a slave-device chip-select signal, the snooping decoder circuit being enabled by the slave-device chip-select signal to decode communications carried on the MISO signal between a slave device and the master device.

Example 15. The airbag-deployment systems of Example 10 through Example 14, wherein the master device includes a microcontroller, the system device includes an integrated circuit, and the expansion device includes an integrated circuit.

Example 16. The airbag-deployment systems of Example 10 through Example 15, wherein the snooping decoder circuit includes a physical layer decoder, a protocol layer decoder, and a source ID checker.

Example 17. An expansion device for an airbag-deployment system, the expansion device including: a snooping decoder circuit configured to receive a slave-device chip-select signal originating from a master device and receive a Master In Slave Out (MISO) signal originating from a slave device, the snooping decoder circuit being enabled by the slave-device chip-select signal; a standard decoder circuit configured to receive an expansion chip-select signal originating from the master device and output the MISO signal, the standard decoder circuit being enabled by the expansion chip-select signal; and arming logic that receives a decoded MISO signal from the snooping decoder circuit and configured to output an arm signal to an airbag driver in response to identifying an arm command carried on the decoded MISO signal.

Example 18. The expansion device of claim 17, further including an inhibition logic circuit that receives the decoded MISO signal, the inhibition logic circuit being configured to inhibit an airbag deployment command in response to identifying a passenger inhibit command on the decoded MISO signal.

Example. 19. The expansion device of Example 17 or Example 18, further including a deployment logic circuit configured to generate a deploy command to the airbag driver in response to identifying a deployment command carried on a Master Out Slave In signal received from the master device.

Example. 20. The expansion devices of Example 17 through Example 19, wherein the snooping decoder circuit includes a physical layer decoder, a protocol layer decoder, and a source ID checker.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method to arm an airbag, the method comprising:
- determining (602), by a system device (104), that an arming condition for the airbag has been met;
- delivering (604) a communication to a master device (102) from the system device (106) to inform the master device (104) that the arming condition has been met;
- snooping (606), by an expansion device (106; 306), the communication from the system device (104); and
- arming (608) the airbag by the expansion device (106) in response to snooping the arming condition.

2. The method of claim 1, further comprising receiving sensor data by the system device (104).

3. The method of claim 2, wherein determining that the arming condition for the airbag has been met comprises evaluating the sensor data received by the system device (104).

4. The method of claim 3, wherein evaluating the sensor data comprises finding the sensor data received by the system device (104) exceeds an arming threshold.

5. The method of claim 1, further comprising enabling communication between the master device (102) and the system device (104) with a system chip select signal driven by the master device (102), and further comprising enabling snooping with the system chip select signal.

6. The method of claim 1, further comprising decoding the communication between the master device (102) and the system device (104) by the expansion device (106).

7. The method of claim 1, further comprising determining (201) a passenger seat is vacant, and, in response to determining that the passenger seat is vacant, inhibiting airbag deployment.

8. The method of claim 1, further comprising issuing a deployment command by the master device (102) that triggers deployment of the airbag by the system device (104), the expansion device (106), or both.

9. The method of claim 1, wherein arming the airbag comprises polarizing an airbag driver (AD).

10. An expansion device (106) for an airbag-deployment system (100), the expansion device (106) comprising:
- a snooping decoder circuit (414, 424, 500) configured to receive a system chip-select signal originating from a master device (102) and receive a Master In Slave Out, MISO, signal originating from a system device (104), the snooping decoder circuit being enabled by the slave-device chip-select signal;
- a standard decoder circuit (412, 422) configured to receive an expansion chip-select signal originating from the master device (102) and output the MISO signal, the standard decoder circuit being enabled by the expansion chip-select signal; and
- arming logic (124, 126) that receives a decoded MISO signal from the snooping decoder circuit and configured to output an arm signal to an airbag driver (AD) in response to identifying an arm command carried on the decoded MISO signal.

11. The expansion device of claim 10, further comprising an inhibition logic circuit that receives the decoded MISO signal, the inhibition logic circuit being configured to inhibit an airbag deployment command in response to identifying a passenger inhibit command on the decoded MISO signal.

12. The expansion device of claim 10, further comprising a deployment logic circuit configured to generate a deploy command to the airbag driver (AD) in response to identifying a deployment command carried on a Master Out Slave In, MOSI, signal received from the master device (102).

13. The expansion device of claim 10, wherein the snooping decoder circuit (414, 424, 500) comprises a physical layer decoder, a protocol layer decoder, and a source ID checker.

14. An airbag-deployment system comprising:
- a master device (102) configured to output a system chip-select signal, output an expansion chip-select signal, output a Master-Out Slave-In, MOSI, signal, and receive a Master-In Slave-Out, MISO, signal;
- a system device (104) comprising,
- a MISO output (104D),
- a chip-select input (104C) configured to receive the system chip-select signal originating from the master device (102), the system chip-select signal enabling communication of the MISO signal from the system device (104) to the master device (102),
- a sensor (108, 201) interface (420, 428) to receive sensor data, and
- logic circuitry (120) configured to generate an arm command carried on the MISO signal in response to an arm condition being met by the sensor data; and
- an expansion device (106, 306) according to any of the previous claims 10 to 13, wherein the snooping decoder circuit (414, 424, 500) is configured to receive the system chip-select signal originating from the master device (102) and receive the MISO signal, and the standard decoder circuit (412, 422) is configured to receive the expansion chip-select signal originating from the master device (102) and output the MISO signal.

15. The airbag-deployment system of claim 14, wherein the system device further comprises a passenger-inhibit logic circuit configured to receive sensor data and configured to generate a passenger inhibit command on the decoded MISO signal in response to determining a passenger-seat vacancy.

16. The airbag-deployment system of claim 14, wherein the system device (104) further comprises a system-device snooping decoder circuit configured to receive the MISO signal, and wherein:
- the system-device snooping decoder circuit is configured to receive the expansion chip-select signal, the snooping decoder circuit being enabled by the expansion chip-select signal to decode communications carried on the MISO signal between the expansion device (106) and the master device (102); and/or
the system-device snooping decoder circuit is configured to receive a slave-device chip-select signal, the snooping decoder circuit being enabled by the slave-device chip-select signal to decode communications carried on the MISO signal between a slave device (408) and the master device (102).
